# EUROPEAN PATENT SPECIFICATION

(11) **EP 3 207 067 B1**
(45) Date of publication and mention of the grant of the patent: **07.08.2019**
(21) Application number: 15778946.2
(22) Date of filing: 12.10.2015
(51) Int. Cl.: C08F 4/656, C08F 110/02

(54) **CATALYST COMPOSITION FOR THE POLYMERIZATION OF OLEFINS**
KATALYSATORZUSAMMENSETZUNG ZUR POLYMERISIERUNG VON OLEFINEN
COMPOSITION DE CATALYSEUR POUR LA POLYMÉRISATION DES OLÉFINES

(30) Priority: 16.10.2014 EP 14189160
(43) Date of publication of application: 23.08.2017
(73) Proprietor: SABIC Global Technologies B.V., 4612 PX Bergen op Zoom (NL)
(72) Inventor: SMEETS, Remy Peter Theresia, NL-6160 GA Geleen (NL); CHAN, Robert Lap Key, NL-6160 GA Geleen (NL); FRIEDERICHS, Nicolaas Hendrika, NL-6160 GA Geleen (NL)
(74) Representative: Sabic Intellectual Property Group
(86) International application number: PCT/EP2015/073577
(87) International publication number: WO 2016/058999

(56) References cited:
- EP-A1- 1 947 123
- EP-A1- 2 284 199
- WO-A1-2009/112254
- WO-A2-2004/018529
- WO-A2-2013/087185

## Description

The present invention relates to catalyst compositions for the polymerization of olefins, in particular for production of ultra-high molecular weight polyethylenes, and to processes for the production of polyolefins using said catalyst compositions, in particular to processes for the production of ultra-high molecular weight using said catalyst compositions.

In the production of polyolefins via heterogeneous catalytic polymerization processes, the polyolefin is formed as solid matter onto a catalyst particle. In state-of-the-art heterogeneous catalytic polymerization processes for the production of polyolefins, the catalyst remains in the final polymer. As a result of this, the polyolefin that is produced contains a fraction of catalyst material. This trace catalyst material may have an influence on the material properties of the polyolefin that is produced, and may have an influence on the equipment used to process the polyolefin into moulded objects. In addition, lower amounts of catalyst may translate into lower catalyst cost per amount of polyolefin produced. For these reasons, there is an ongoing need to reduce the amount of catalyst material that is used in heterogeneous catalytic olefin polymerization processes, whilst still allowing to operate at high productivity and producing polymers of the desired quality.

The catalytic production of polyolefins is well known in the art. A very special class of polyolefins are ultra-high molecular weight polyethylenes (further referred to as UHMWPE), which have a very high average molecular weight ranging from about 1000000 to well above 6000000 g/mol, whereas high-density polyethylene (HDPE) typically has a molar mass ranging between 50000 and 300000. The polymer synthesis to obtain UHMWPE is disclosed in the Journal of Macromolecular Science, Pt C, Polymer Reviews, Vol. C42, No. 3, pages 355-371, 2002. The high molecular weight gives the UHMWPE a unique combination of characteristics, making it suitable for applications where lower molecular weight grades fail. Amongst the specific characteristics of UHMWPE are, for example, a very high abrasion resistance, a very high impact resistance, a very high melt viscosity and a low dynamic coefficient of friction.

Because of the high molecular weight and the high melt viscosity, specialized processing methods like compression moulding and ram extrusion need to be applied. As a result of its high molecular weight, UHMWPE exhibits a poor flowability when molten, and as such it is difficult to mould it into pellet form. Therefore, the product has to be delivered in powder form, and has to be processed from powder form. Consequently, the powder properties greatly determine the production process as well as the process of conversion of the powder into the desired object shape. Being of such influence on the ability to process the material, it is paramount in the production of UHMWPE to ensure the production of polymeric particles of the desired morphology. It is an objective to control the production process of UHMWPE in such way that polymer particles of a certain controlled particle size are produced. For typical processing procedures such as ram extrusion and compression moulding, which both involve sintering of the powder particles, a specific particle size and distribution are required. This is exemplified in Engineering Materials Handbook, H.L. Stein, Vol. 2: Engineering Plastics, ASM International, 1999, pages 167-171. This sintering can only be achieved when dense polymer powder packing in the mould is achieved. For this, a high powder bulk density is required. The bulk density of UHMWPE as measured according to ISO R60 should preferably be above 0.3 g/cm³. The average particle size D₅₀ as measured according to ISO-13320 is preferably lower than 250µm, more preferably lower than 175µm. Powder particles of such small dimensions are in particular suitable for applications where a uniform distribution of additives, such as colorants, is required. As the UHMWPE powder particles are processed in solid phase, the distribution of additive particles only takes place between the solid polymer powder particles. This means that use of smaller powder particles results in an improved distribution of additives. In applications where the distribution of additives has an effect on the properties of the obtained moulded article, this is particularly relevant. For example, in case of distribution of additives such as colorants this has a significant effect on the quality of the obtained moulded article in terms of appearance, in particular if the colorants are pigments.

In the case of heterogeneous catalytic olefin polymerizations, it is well known that the shape of the polymer powder particles is translated from the shape of the catalyst particles, also known as the replica phenomenon. In general, when this replication takes place, the average particle size of the polymer is proportional to the cube root of the catalyst yield, i.e. the grams of polymer produced per gram of catalyst. See for example Dall'Occo et al, in "Transition Metals and Organometallics as Catalysts for Olefin Polymerization" (Kaminsky, W.; Sinn, H., Eds.) Springer, 1988, page 209-222. Due to this proportionality, one could produce small polymer particles by reducing the catalyst yield, but this causes undesired high catalyst residues in the polymer. This puts severe requirements on the catalyst because a high catalyst activity is required combined with a polymer particle size below 250 µm, preferably below 175µm.

In heterogeneous catalytic olefin polymerizations, it is well known that the polymer particles can grow in size upon increasing the relative amount of polymer per amount of catalyst.

When the polymerization process is controlled in such way as to arrive at a certain low average particle size D₅₀, the use of conventional catalyst systems will lead to undesirably high quantities of catalyst residues in the particles, as well as to a poor yield as defined by the weight of polymer obtained per weight unit of catalyst, thus rendering the process unfavorable in both terms of product quality as well as process economics. It is an objective to develop a catalyst composition having particles of a smaller dimension, in order to keep the yield of polymer per weight unit of catalyst at a certain high level, whilst still resulting in a catalyst having an activity that is high enough to operate the UHMWPE production process in an economic way and resulting in a product having the desired quality.

Catalytic systems for UHMWPE production are described in various publications. For example, EP2279215 describes catalyst systems comprising the reaction product obtained by reaction of a hydrocarbon solution comprising an organic oxygen containing magnesium compound or a halogen containing magnesium compound and an organic oxygen containing titanium compound, and a mixture of a hydrocarbon-moiety containing group III-metal compound and a silicon compound, and the use of such systems for production of UHMWPE, with the objective of producing UHMWPE with high catalyst activity and desired particle size. However, the catalyst particles produced according to the examples have a relatively large size.

US6511935 describes catalyst systems produced from a liquid complex comprising a magnesium compound and a titanium compound, which is treated with an electron donor, and which is contacted with an organooaluminium halide, such as isobutylaluminium dichloride, resulting in a precipitated solid product. However, the catalyst particles produced according to the examples have a relatively large size.

EP523657 describes catalyst systems for use in production of UHMWPE which is obtained by first preparing a solution of a magnesium compound and a titanium compound, and subsequently reacting with a halogenating agent, such as SiCl₄. The catalyst according to this publication is synthesized via a complex and lengthy process and the catalyst particles produced according to the examples have relatively large size.

It is the object of the present invention to provide a catalyst composition which is suitable for production of UHMWPE with an average powder particle size D₅₀ lower than 175µm, a high product yield per weight unit of catalyst, a high productivity defined as catalyst activity, and a low quantity of catalyst traces in the product. Another object of the present invention is to provide a process for production of such catalyst composition. Yet another object of the present invention is to provide a process for production of polyolefins using said catalyst composition.

This is achieved by a catalyst composition characterized in that:
a) the catalyst is produced using a metal-containing compound having the formula (I):

   MeRₙX₃₋ₙ (I)

   in which X is a halogen, Me is a metal of group III of Mendelejev's Periodic Table of Elements, R is a hydrocarbon moiety comprising > 2 carbon atoms, and 1≤n<3, or a dimer of a compound of formula (I); and
b) the average particle size of the catalyst as reflected by D₅₀ (measured according to ISO 13320) is between 0.5 and 4.5 µm wherein the catalyst composition comprises the product obtained by combining: a) a hydrocarbon solution comprising: • a magnesium-containing compound selected from an organic oxygen-containing magnesium compound and a halogen-containing magnesium compound; and • an organic oxygen-containing titanium compound; and b) a solution comprising a mixture of: • a metal-containing compound having the formula (I): MeRₙX₃₋ₙ (I) in which X is a halogen, Me is a metal of group III of Mendelejev's Periodic Table of Elements, R is a hydrocarbon moiety comprising > 2 carbon atoms, and n is 1≤n<3, or a dimer of a compound of formula (I); and • a silicon-containing compound of formula R'ₘSiCl₄₋ₘ in which 0≤m≤2 and R' is a hydrocarbon moiety comprising at least one carbon atom; in which the combination of solutions a) and b) results in a suspension of solid particles.

Preferably, the average particle size D₅₀ of the catalyst produced according to the present invention is between 0.5 and 4.0 µm, more preferably between 1.5 and 4.0 µm, even more preferably between 2.5 and 4.0 µm, alternatively between 2.5 and 3.5 µm. Alternatively, the average particle size D₅₀ of the catalyst produced according to the present invention is between 0.5 and 3.5 µm. Such average particle sizes may for example contribute to an increased yield and catalyst activity, and may allow the production of UHMWPE having a low average particle size and high elongational stress.

The dimer of a compound of formula (I) relates to a composition produced by reacting two compounds of formula (I) to obtain a composition according to formula (II):

Me₂P_{n'}X_{6-n'} (II)

in which X is a halogen, Me is a metal of group III of Mendelejev's Periodic Table of Elements, R is a hydrocarbon moiety comprising > 2 carbon atoms, and 2≤n'<6.

Another embodiment of the invention relates to a process for production of a catalyst composition for polymerization of olefins, characterized in that the process comprises combining:
a) a hydrocarbon solution comprising:
   i) a magnesium-containing compound selected from an organic oxygen-containing magnesium compound and a halogen-containing magnesium compound; and
   ii) an organic oxygen-containing titanium compound;
b) a solution comprising:
   i) a metal-containing compound having the formula (I):

      MeRₙX₃₋ₙ (I)

      in which X is a halogen, Me is a metal of group III of Mendelejev's Periodic Table of Elements, R is a hydrocarbon moiety comprising > 2 carbon atoms, and n is 1≤n<3, or a dimer of a compound of formula (I); and
   ii) a silicon-containing compound of formula R'ₘSiCl₄ in which 0≤m≤2 and R' is a hydrocarbon moiety comprising at least one carbon atom;
in which the combination of solutions a) and b) results in a suspension of solid particles.

According to a preferred embodiment, the magnesium-containing compound is selected from organic oxygen-containing magnesium compounds and halogen-containing magnesium compound. Preferably the magnesium-containing compound is selected from organic oxygen-containing magnesium compounds. Suitable organic oxygen-containing compounds include alkoxides such as magnesium methylate, magnesium ethylate and magnesium isopropylate, and alkylalkoxides such as magnesium ethylethylate. Preferably, the organic oxygen-containing magnesium compound is magnesium ethylate. Suitable halogen-containing magnesium compounds include magnesium dihalides and magnesium dihalide complexes, in which the halide preferably is chloride. Most preferably, the halogen-containing magnesium complex is magnesium dichloride.

The halogen is selected from chlorine, bromine or iodine, preferably chlorine.

The hydrocarbon solution of the organic oxygen-containing magnesium compound and the organic oxygen-containing titanium compound can be prepared using aliphatic or aromatic hydrocarbons as the solvent. Preferably the hydrocarbon solution of the organic oxygen-containing magnesium compound and the organic oxygen-containing titanium compound can be prepared using aliphatic hydrocarbons as the solvent. Preferable, said hydrocarbons are selected from heptane, hexane, pentane, octane or mixtures thereof, including the isomers thereof.

In another preferred embodiment, the catalyst composition is produced using a metal-containing compound having the formula (I):

MeRₙX₃₋ₙ (I)

or a dimer of a compound of formula(I)
in which:
- R is a hydrocarbon moiety comprising ≥ 4 carbon atoms
- the metal Me is selected from aluminium, gallium or boron
- the halogen X is chlorine, bromine or iodine.

In a preferred embodiment, n in formula (I) equals 2. In a preferred embodiment, R in formula (I) is a hydrocarbon moiety comprising 4 carbon atoms.

In a preferred embodiment, the metal-containing compound is selected from n-butyl aluminium dichloride, isobutyl aluminium dichloride, diisobutyl aluminium chloride, di-n-butyl aluminium chloride, sesquiisobutyl aluminium chloride, or mixtures thereof. Preferably, the metal-containing compound is selected from diisobutyl aluminium chloride, di-n-butyl aluminium chloride, sesquiisobutyl aluminium chloride, or mixtures thereof. Use of such metal-containing compounds may for example contribute to an increase in catalyst activity. Use of such metal-containing compounds may for example contribute to an increase in yield of polymer.

The metal-containing compound may for example be diisobutyl aluminium chloride.

The organic oxygen-containing titanium compound is selected from titanium alkoxides, titanium phenoxides, titanium oxyalkoxides, condensed titanium alkoxides, titanium carboxylates and titanium enolates. Preferably, the organic oxygen-containing titanium compound is a titanium alkoxide. Preferably, the titanium alkoxide is selected from Ti (OC₂H₅)₄, Ti (OC₃H₇)₄, Ti (OC₄H₉)₄, and Ti (OC₈H₁₇)₄. Most preferably, the titanium compound is Ti (OC₄H₉)₄.

The molar ratio of the metal in the metal-containing compound having the formula (I):

MeRₙX₃₋ₙ (I)

to the organic oxygen-containing titanium compound preferably is between 0.01 and 0.5, more preferably between 0.1 and 0.4, and even more preferably between 0.1 and 0.35.

The molar ratio of magnesium to titanium is preferably lower than 3:1, and more preferably between 0,2:1 and 3:1.

The molar ratio of the hydrocarbon moiety R in the metal-containing compound (I) to the titanium in the oxygen-containing titanium compound may for example be between 0.10 and 0.60, preferably between 0.20 and 0.40. This may for example contribute to the reduction of the particle size of the catalyst.

The molar ratio of the metal in the metal-containing compound having the formula (I) to the organic oxygen-containing titanium compound may for example be lower than the molar ratio of the hydrocarbon moiety R in the metal-containing compound (I) to the titanium in the oxygen-containing titanium compound. This may for example contribute to the reduction of the particle size of the catalyst.

The molar ratio of the chlorine from the silicon containing compound R'ₘSiCl₄₋ₘ to magnesium is preferably higher than 2, more preferably higher than 3 and even more preferable higher than 4.

The molar ratios presented above are based on the molar quantities of compounds as introduced into the catalyst synthesis.

The silicon-containing compound of formula R'ₘSiCl₄₋ₘ is selected from dimethyl dichlorosilane, diethyl dichlorosilane, isobutylmethyl dichlorosilane, diisopropyl dichlorosilane, diisobutyl dichlorosilane, isopropylisobutyl dichlorosilane, dicyclopentyl dichlorosilane, cyclohexylmethyl dichlorosilane, phenylmethyl dichlorosilane, diphenyl dichlorosilane, methyl trichlorosilane, ethyl trichlorosilane, n-propyl trichlorosilane, isopropyl trichlorosilane, n-butyl trichlorosilane, isobutyl trichlorosilane, n-pentyl trichlorosilane, n-hexyl trichlorosilane, n-octyl trichlorosilane, isooctyl trichlorosilane, phenyl trichlorosilane, or tetrachlorosilane. Preferably, the silicon-containing compound of formula R'ₘSiCl₄ is tetrachlorosilane.

In a preferred embodiment, a co-catalyst is employed in the process for production of polyolefins using catalysts according to the present invention. The co-catalyst is preferably an organo-aluminium compound having the formula AlR"₃. Preferably, R" is a hydrocarbon moiety containing 1-10 carbon atoms. Suitable organo-aluminium compounds of formula AlR"₃ include trimethyl aluminium, triethyl aluminium, triisobutyl aluminium, tri-n-hexyl aluminium and tri octyl aluminium.

Another object of the invention is to provide a process for production of polyolefins using such catalyst compositions.

The polyolefin is UHMWPE. Preferably, the yield as defined by the weight of UHMWPE polymer produced per weight unit of catalyst used in the process is greater than 15 kg polymer per g catalyst, even more preferably greater than 20 kg polymer per g catalyst, and the average particle size D₅₀ of the ultra-high molecular weight powder particles is lower than 175µm, preferably lower than 150µm.

The catalyst of the present invention may be obtained for example by a first reaction between a magnesium alkoxide and a titanium alkoxide, followed by dilution with a hydrocarbon solvent, resulting in a soluble complex consisting of a magnesium alkoxide and a titanium alkoxide and thereafter a reaction between a hydrocarbon solution of said complex and a mixture of a metal-containing compound having the formula (I):

MeRₙX₃₋ₙ (I)

in which X is a halogen, Me is a metal of group III of Mendelejev's Periodic Table of Elements, R is a hydrocarbon moiety comprising > 2 carbon atoms, and n is 1≤n<3, or a dimer of a compound of formula (I); and
a silicon-containing compound of formula R'ₘSiCl₄₋ₘ in which 0≤m≤2 and R' is a hydrocarbon moiety comprising at least one carbon atom.

Preferably, the metal-containing compound is an aluminium compound having the formula (III):

AlRₙX₃₋ₙ (III)

in which X is a halogen, R is a hydrocarbon moiety comprising > 2 carbon atoms, and n is 1≤n<3, or a dimer of a compound of formula (III); Preferably, this aluminium compound is used as a solution in a hydrocarbon. Any hydrocarbon that does not react with the aluminium compound is suitable to be applied as the solvent.

The aluminium compound may be present in the form of a dimer of an aluminium compound having the formula (III).

The sequence of the addition can be either adding the hydrocarbon solution containing the organic oxygen containing magnesium compound and the organic oxygen containing titanium compound to the mixture of the aluminium compound of formula (III) and the silicon-containing compound of formula R'ₘSiCl₄₋ₘ or the reversed.

The temperature for this reaction can be any temperature below the boiling point of the used hydrocarbon.

Room temperature is in the present invention understood to be 20°C.

In the reaction of the hydrocarbon solution of organic oxygen containing magnesium compound and organic oxygen containing titanium with the mixture of the aluminium compound of formula (III) and the silicon-containing compound of formula R'ₘSiCl₄₋ₘ, a solid precipitates and after the precipitation reaction the resulting mixture is heated for a certain period of time to finish the reaction. After the reaction the precipitate is filtered and washed with a hydrocarbon. Other means of separation of the solids from the diluents and subsequent washings can also be applied, like for example multiple decantation steps. All steps should be performed in an inert atmosphere of nitrogen or another suitable inert gas.

It is essential that the metal compound of formula MeRₙX₃₋ₙ and the silicon-containing compound of formula R'ₘSiCl₄₋ₘ are used as a mixture in the reaction with the hydrocarbon solution, instead of introducing the compounds separately or sequentially, as only the procedure in which the metal compound of formula MeRₙX₃₋ₙ and the silicon-containing compound of formula R'ₘSiCl₄₋ₘ are used as a mixture will result in the desired results.

The average particle size (D₅₀) of the catalyst particles and of the polymer powders was determined according to ISO13320 (2009). ISO13320 (2009) relates to particle size analysis using laser diffraction methods.

The molecular mass of the polymer can be controlled by any means as known in the art, such as for example by adjustment of the polymerization temperature or by the addition of molecular weight control agents such as hydrogen or zinc alkyls.

The polymerisation reaction of ethylene may be performed in the gas phase or in bulk in the absence of an organic solvent, or carried out in liquid slurry in the presence of an organic diluent. The polymerisation can be carried out batchwise or in a continuous mode. The polymerisation can also be carried out in multiple interconnected reactors, for example in 2 reactors in series using different conditions in each reactor in order to broaden the molecular weight and compositional distribution of the polyethylene. These reactions are performed in the absence of oxygen, water, or any other compounds that may act as a catalyst poison. Suitable solvents include for example alkanes and cycloalkanes such as pentane, hexane, heptane, n-octane, iso-octane, cyclohexane, and methylcyclohexane ; alkylaromatics such as toluene, xylene, ethylbenzene, isopropylbenzene, ethyltoluene, n-propylbenzene and diethylbenzene. The polymerisation temperature may range between 20°C and 200°C and preferably ranges between 20°C and 120°C. The partial pressure of a monomer during polymerisation may be the atmospheric pressure and more preferably a partial pressure between 2 and 40 bars.

The polymerisation can be carried out in the presence of a so-called anti-static agent or anti fouling agent, in an amount ranging from 1 to 500 ppm related to the total reactor contents.

Also so-called external donors may be applied during the polymerisation in order to further modify the catalyst performance if this is desired. Suitable external donors are organic compounds containing hetero atoms which have at least one lone pair of electrons available for coordination to the catalyst components or aluminum alkyls. Suitable examples of external donors include alcohols, ethers, esters, silanes and amines.

The catalyst according to the invention may be applied in ethylene polymerisation processes to produce ultra high molecular weight polyethylene. Polyethylenes and production processes are disclosed in "Handbook of polyethylene" by Peacock at pages 1-66 (ISBN 0-8247-9546-6).

Due to the very high molecular weight of UHMWPE, it is difficult to analyze its molar mass by for instance Gel Permeation Chromatography (GPC) or Size Exclusion Chromatography (SEC). Alternatively, the so called Elongational Stress can be determined according to DIN 53493. This Elongational Stress, sometimes also referred to as "Flow Value", can subsequently be translated into the molecular weight as disclosed for example by J. Berzen et al. in The British Polymer Journal, Vol. 10, December 1978, pp 281-287.

### Examples

The invention will now be illustrated by the following examples.

### Experiment I: Preparation of hydrocarbon solution of magnesium-containing compound and organic oxygen-containing titanium compound

To a 1 l round bottom flask equipped with a stirrer, a dropping funnel and a water cooler, 25 g of Mg(OC₂H₅)₂ (0.218 mol) as a solid and 37 ml of Ti(OC₄H₉)₄ (0.107 mol) as a liquid were added, both at room temperature (20°C). The dropping funnel was filled with 370 ml of hexane. The mixture of Mg(OC₂H₅)₂ and Ti(OC₄H₉)₄ in the round-bottom flask was heated to a temperature of 180°C and stirred at 300 rpm for 1.5 hours. A clear liquid was obtained. The mixture was then cooled down to 120°C. The hexane was added slowly whilst the solution was kept at a temperature of 120°C. After the hexane was added to the solution completely, the solution was cooled down to room temperature. The resulting solution was stored under nitrogen. Analyses on the solution showed a titanium concentration of 0.25 mol/l.

### Experiment IIA: Catalyst preparation

In a 1 l baffled reactor equipped with a stirrer and a condenser, 400 ml of hexane was introduced. To this, 1.17 ml of diisobutylaluminium chloride (6 mmol Al) was added, followed by 17.3 ml of tetrachlorosilane. The stirrer was started at 1700 rpm. Via a peristaltic pump, 200 ml of the solution of Experiment I was added gradually over a period of 4 h, during which the reactor was kept at room temperature (20°C). The resulting suspension was subsequently refluxed for 2 h at the boiling temperature of hexane (69°C), after which it was cooled down to room temperature, filtered and washed with 2 l of hexane. The obtained catalyst was mixed with hexane, and stored under nitrogen. The average particle size D₅₀ of the catalyst particles thus obtained was determined to be 4.0 µm. The molar ratio of isobutyl-moieties to titanium atoms in the obtained catalyst was 0.24. The molar ratio of aluminium atoms to titanium atoms in the obtained catalyst was 0.12.

### Experiment IIB: Catalyst preparation

In a 1 l baffled reactor equipped with a stirrer and a condenser, 400 ml of hexane was introduced. To this, 2.34 ml of diisobutylaluminium chloride (12 mmol Al) was added, followed by 17.3 ml of tetrachlorosilane. The stirrer was started at 1700 rpm. Via a peristaltic pump, 200 ml of the solution of Experiment I was added gradually over a period of 4 h during which the reactor was kept at room temperature (20°C). The resulting suspension was subsequently refluxed for 2 h at the boiling temperature of hexane (69°C), after which it was cooled down to room temperature, filtered and washed with 2 l of hexane. The obtained catalyst was mixed with hexane, and stored under nitrogen. The average particle size D₅₀ of the catalyst particles thus obtained was determined to be 3.4 µm. The molar ratio of isobutyl-moieties to titanium atoms in the obtained catalyst was 0.48. The molar ratio of aluminium atoms to titanium atoms in the obtained catalyst was 0.24.

### Experiment IIC: Catalyst preparation

In a 1 l baffled reactor equipped with a stirrer and a condenser, 400 ml of hexane was introduced. To this, 0.585 ml of diisobutylaluminium chloride (3 mmol Al) was added, followed by 17.3 ml of tetrachlorosilane. The stirrer was started at 1700 rpm. Via a peristaltic pump, 200 ml of the solution of Experiment I was added gradually over a period of 4 h during which the reactor was kept at room temperature (20°C). The suspension was subsequently refluxed for 2 h at the boiling temperature of hexane (69°C), after which it was cooled down to room temperature, filtered and washed with 2 l of hexane. The obtained catalyst was mixed with hexane, and stored under nitrogen. The average particle size D₅₀ of the catalyst particles thus obtained was determined to be 4.5 µm. The molar ratio of isobutyl-moieties to titanium atoms in the obtained catalyst was 0.12. The molar ratio of aluminium atoms to titanium atoms in the obtained catalyst was 0.06.

### Experiment IID: Catalyst preparation (Comparative)

In a 1 l baffled reactor equipped with a stirrer and a condenser, 400 ml of hexane was introduced. To this, 3.5 ml of a 50% ethyl aluminium dichloride (12 mmol Al) solution in hexane was added, followed by 17.3 ml of tetrachlorosilane. The stirrer was started at 1700 rpm. Via a peristaltic pump, 200 ml of the solution of Experiment I was added gradually over a period of 4 h during which the reactor was kept at room temperature (20°C). The suspension was subsequently refluxed for 2 h at the boiling temperature of hexane (69°C), after which it was cooled down to room temperature, filtered and washed with 2 l of hexane. The obtained catalyst was mixed with hexane, and stored under nitrogen. The average particle size D₅₀ of the catalyst particles thus obtained was determined to be 4.9 µm. The molar ratio of ethyl-moieties to titanium atoms in the obtained catalyst was 0.24. The molar ratio of aluminium atoms to titanium atoms in the obtained catalyst was 0.24.

### Experiment IIE: Catalyst preparation (Comparative)

In a 1 l baffled reactor equipped with a stirrer and a condenser, 400 ml of hexane was introduced. To this, 0.75 ml of diethyl aluminium chloride (6 mmol Al) was added, followed by 17.3 ml of tetrachlorosilane. The stirrer was started at 1700 rpm. Via a peristaltic pump, 200 ml of the solution of Experiment I was added gradually over a period of 4 h during which the reactor was kept at room temperature (20°C). The suspension was subsequently refluxed for 2 h at the boiling temperature of hexane (69°C), after which it was cooled down to room temperature, filtered and washed with 2 l of hexane. The obtained catalyst was mixed with hexane, and stored under nitrogen. The average particle size D₅₀ of the catalyst particles thus obtained was determined to be 7.4 µm. The molar ratio of ethyl-moieties to titanium atoms in the obtained catalyst was 0.24. The molar ratio of aluminium atoms to titanium atoms in the obtained catalyst was 0.12.

### Experiment IIF: Catalyst preparation (Comparative)

In a 1 l baffled reactor equipped with a stirrer and a condenser, 400 ml of hexane was introduced. To this, 1.5 ml of diethyl aluminium chloride (12 mmol Al) was added, followed by 17.3 ml of tetrachlorosilane. The stirrer was started at 1700 rpm. Via a peristaltic pump, 200 ml of the solution of Experiment I was added gradually over a period of 4 h during which the reactor was kept at room temperature (20°C). The suspension was subsequently refluxed for 2 h at the boiling temperature of hexane (69°C), after which it was cooled down to room temperature, filtered and washed with 2 l of hexane. The obtained catalyst was mixed with hexane, and stored under nitrogen. The average particle size D₅₀ of the catalyst particles thus obtained was determined to be 7.2 µm. The molar ratio of ethyl-moieties to titanium atoms in the obtained catalyst was 0.48. The molar ratio of aluminium atoms to titanium atoms in the obtained catalyst was 0.24.

### Experiment IIG: Catalyst preparation (Comparative)

In a 1 l baffled reactor equipped with a stirrer and a condenser, 400 ml of hexane was introduced. To this, 1.5 ml of 50% ethyl aluminium dichloride solution in hexane (5.1 mmol Al) was added, followed by 17.3 ml of tetrachlorosilane. The stirrer was started at 1700 rpm. Via a peristaltic pump, 200 ml of the solution of Experiment I was added gradually over a period of 4 h during which the reactor was kept at room temperature (20°C). The suspension was subsequently refluxed for 2 h at the boiling temperature of hexane (69°C), after which it was cooled down to room temperature, filtered and washed with 2 l of hexane. The obtained catalyst was mixed with hexane, and stored under nitrogen. The average particle size D₅₀ of the catalyst particles thus obtained was determined to be 5.1 µm. The molar ratio of ethyl-moieties to titanium atoms in the obtained catalyst was 0.12. The molar ratio of aluminium atoms to titanium atoms in the obtained catalyst was 0.12.

### Experiment IIH: Catalyst preparation (Comparative)

In a 1 l baffled reactor equipped with a stirrer and a condenser, 400 ml of hexane was introduced. To this, 4.68 ml of diisobutylaluminium chloride (24 mmol Al) was added, followed by 17.3 ml of tetrachlorosilane. The stirrer was started at 1700 rpm. Via a peristaltic pump, 200 ml of the solution of Experiment I was added gradually over a period of 4 h during which the reactor was kept at room temperature (20°C). The suspension was subsequently refluxed for 2 h at the boiling temperature of hexane (69°C), after which it was cooled down to room temperature, filtered and washed with 2 l of hexane. The obtained catalyst was mixed with hexane, and stored under nitrogen. The average particle size D₅₀ of the catalyst particles thus obtained was determined to be 5.5 µm. The molar ratio of isobutyl-moieties to titanium atoms in the obtained catalyst was 0.96. The molar ratio of aluminium atoms to titanium atoms in the obtained catalyst was 0.48.

### Experiment IIIA: Polymerization

The polymerization reaction was carried out in a 10 l autoclave using 5 l purified hexane as diluent. 7.5 mmol of triisobutyl aluminium was added to the hexane. The mixture was heated to 75°C and pressurized with ethylene at a pressure of 4.5 barg. Subsequently a quantity of catalyst slurry obtained from Experiment IIA containing 40 mg of catalyst was dosed. The temperature was maintained at 75°C and the pressure was kept constant by feeding ethylene. The reaction was stopped when approximately 1000 g of ethylene had been supplied to the reactor or when the reaction had lasted for 2 hours. Stopping was performed by de-pressurizing and cooling down the reactor. The reactor contents were passed through a filter. The polymer powder was collected, dried and analyzed.

The yield of polymer was 23.4 kg/g of catalyst, whereas the catalyst activity was 3 kg polyethylene per g catalyst per hour per bar.

The resulting UHMPWE product had an average particle size D₅₀ of 101 µm, and an elongational stress of 0.409 N/mm².

### Experiment IIIB: Polymerization

The polymerization reaction was carried out in a 10 l autoclave using 5 l purified hexane as diluent. 7.5 mmol of triisobutyl aluminium was added to the hexane. The mixture was heated to 75°C and pressurized with ethylene at a pressure of 4.5 barg. Subsequently a quantity of catalyst slurry obtained from Experiment IIB containing 20 mg of catalyst was dosed. The temperature was maintained at 75°C and the pressure was kept constant by feeding ethylene. The reaction was stopped when approximately 1000 g of ethylene had been supplied to the reactor or when the reaction had lasted for 2 hours. Stopping was performed by de-pressurizing and cooling down the reactor. The reactor contents were passed through a filter. The polymer powder was collected, dried and analyzed.

The yield of polymer was 46.0 kg/g of catalyst, whereas the catalyst activity was 5.6 kg polyethylene per g catalyst per hour per bar.

The resulting UHMPWE product had an average particle size D₅₀ of 101 µm, and an elongational stress of 0.378 N/mm².

### Experiment IIIC: Polymerization

The polymerization reaction was carried out in a 10 l autoclave using 5 l purified hexane as diluent. 7.5 mmol of triisobutyl aluminium was added to the hexane. The mixture was heated to 75°C and pressurized with ethylene at a pressure of 4.5 barg. Subsequently a quantity of catalyst slurry obtained from Experiment IIC containing 40 mg of catalyst was dosed. The temperature was maintained at 75°C and the pressure was kept constant by feeding ethylene. The reaction was stopped when approximately 1000 g of ethylene had been supplied to the reactor or when the reaction had lasted for 2 hours. Stopping was performed by de-pressurizing and cooling down the reactor. The reactor contents were passed through a filter. The polymer powder was collected, dried and analyzed.

The yield of polymer was 16.2 kg/g of catalyst, whereas the catalyst activity was 1.6 kg polyethylene per g catalyst per hour per bar.

The resulting UHMPWE product had an average particle size D₅₀ of 111 µm, and an elongational stress of 0.423 N/mm².

### Experiment IIID: Polymerization (Comparative)

The polymerization reaction was carried out in a 10 l autoclave using 5 l purified hexane as diluent. 7.5 mmol of triisobutyl aluminium was added to the hexane. The mixture was heated to 75°C and pressurized with ethylene at a pressure of 4.5 barg. Subsequently a quantity of catalyst slurry obtained from Experiment IID containing 40 mg of catalyst was dosed. The temperature was maintained at 75°C and the pressure was kept constant by feeding ethylene. The reaction was stopped when approximately 1000 g of ethylene had been supplied to the reactor or when the reaction had lasted for 2 hours. Stopping was performed by de-pressurizing and cooling down the reactor. The reactor contents were passed through a filter. The polymer powder was collected, dried and analyzed.

The yield of polymer was 11,0 kg/g of catalyst, whereas the catalyst activity was 2.0 kg polyethylene per g catalyst per hour per bar.

The resulting UHMPWE product had an average particle size D₅₀ of 117 µm, and an elongational stress of 0.420 N/mm².

### Experiment IIIE: Polymerization (Comparative)

The polymerization reaction was carried out in a 10 l autoclave using 5 l purified hexane as diluent. 7.5 mmol of triisobutyl aluminium was added to the hexane. The mixture was heated to 75°C and pressurized with ethylene at a pressure of 4.5 barg. Subsequently a quantity of catalyst slurry obtained from Experiment IIE containing 40 mg of catalyst was dosed. The temperature was maintained at 75°C and the pressure was kept constant by feeding ethylene. The reaction was stopped when approximately 1000 g of ethylene had been supplied to the reactor or when the reaction had lasted for 2 hours. Stopping was performed by de-pressurizing and cooling down the reactor. The reactor contents were passed through a filter. The polymer powder was collected, dried and analyzed.

The yield of polymer was 2.9 kg/g of catalyst, whereas the catalyst activity was 0.36 kg polyethylene per g catalyst per hour per bar.

### Experiment IIIF: Polymerization (Comparative)

The polymerization reaction was carried out in a 10 l autoclave using 5 l purified hexane as diluent. 7.5 mmol of triisobutyl aluminium was added to the hexane. The mixture was heated to 75°C and pressurized with ethylene at a pressure of 4.5 barg. Subsequently a quantity of catalyst slurry obtained from Experiment IIF containing 40 mg of catalyst was dosed. The temperature was maintained at 75°C and the pressure was kept constant by feeding ethylene. The reaction was stopped when approximately 1000 g of ethylene had been supplied to the reactor or when the reaction had lasted for 2 hours. Stopping was performed by de-pressurizing and cooling down the reactor. The reactor contents were passed through a filter. The polymer powder was collected, dried and analyzed.

The yield of polymer was 4.33 kg/g of catalyst, whereas the catalyst activity was 0.54 kg polyethylene per g catalyst per hour per bar.

The resulting UHMPWE product had an average particle size D₅₀ of 138 µm, and an elongational stress of 0.438 N/mm².

### Experiment IIIG: Polymerization (Comparative)

The polymerization reaction was carried out in a 10 l autoclave using 5 l purified hexane as diluent. 7.5 mmol of triisobutyl aluminium was added to the hexane. The mixture was heated to 75°C and pressurized with ethylene at a pressure of 4.5 barg. Subsequently a quantity of catalyst slurry obtained from Experiment IIG containing 40 mg of catalyst was dosed. The temperature was maintained at 75°C and the pressure was kept constant by feeding ethylene. The reaction was stopped when approximately 1000 g of ethylene had been supplied to the reactor or when the reaction had lasted for 2 hours. Stopping was performed by de-pressurizing and cooling down the reactor. The reactor contents were passed through a filter. The polymer powder was collected, dried and analyzed.

The yield of polymer was 3.3 kg/g of catalyst, whereas the catalyst activity was 0.42 kg polyethylene per g catalyst per hour per bar.

The resulting UHMPWE product had an average particle size D₅₀ of 140 µm.

From the examples above, it becomes evident that catalyst compositions according to the present invention, in which the catalyst is produced using a metal-containing compound having the formula MeRₙX₃₋ₙ in which R is a hydrocarbon moiety comprising > 2 carbon atoms and having an average particle size of the catalyst as reflected by D₅₀ between 0.5 and 4.5 µm, result in a clear improvement of catalyst activity and yield during polymerisation of ethylene to UHMWPE, whilst resulting in a polymer product having desired small particle size. For example, catalyst compositions according to the present invention in which the catalyst is produced using a metal-containing compounds having the formula MeRₙX₃₋ₙ in which R is an isobutyl moiety and in which n=2 result in an improvement of the catalyst activity.

## Claims

1. Catalyst composition for the polymerization of olefins, **characterized in that**:
a) the catalyst is produced using a metal-containing compound having the formula (I):
MeRₙX₃₋ₙ (I)
in which X is a halogen, Me is a metal of group III of Mendelejev's Periodic Table of Elements, R is a hydrocarbon moiety comprising > 2 carbon atoms, and n is 1≤n<3, or a dimer of a compound of formula (I); and
b) the average particle size of the catalyst as reflected by D₅₀ (measured according to ISO13320) is between 0.5 and 4.5 µm;
wherein the catalyst composition comprises the product obtained by combining:
a) a hydrocarbon solution comprising:
• a magnesium-containing compound selected from an organic oxygen-containing magnesium compound and a halogen-containing magnesium compound; and
• an organic oxygen-containing titanium compound; and
b) a solution comprising a mixture of:
• a metal-containing compound having the formula (I):
MeRₙX₃₋ₙ (I)
in which X is a halogen, Me is a metal of group III of Mendelejev's Periodic Table of Elements, R is a hydrocarbon moiety comprising > 2 carbon atoms, and n is 1≤n<3, or a dimer of a compound of formula (I); and
• a silicon-containing compound of formula R'ₘSiCl₄₋ₘ in which 0≤m≤2 and R' is a hydrocarbon moiety comprising at least one carbon atom;
in which the combination of solutions a) and b) results in a suspension of solid particles.

2. Catalyst composition according to claim 1 wherein the metal-containing compound is selected from diisobutyl aluminium chloride, di-n-butyl aluminium chloride, sesquiisobutyl aluminium chloride, or mixtures thereof.

3. Catalyst composition according to any of the claims 1-2 in which the magnesium-containing compound is selected from
• organic oxygen-containing magnesium compounds such as alkoxides and alkyloxides which may be selected from magnesium methylate, magnesium ethylate, magnesium isopropylate, or magnesium ethylethylate
• halogen-containing magnesium compounds such as magnesium dihalides

4. Catalyst composition according to any of the claims 1-3 in which
• R is a hydrocarbon moiety comprising ≥ 4 carbon atoms
• the metal Me is selected from aluminium, gallium or boron
• the halogen X is chlorine, bromine or iodine.

5. Catalyst composition according to any one of the claims 1-4 wherein:
• the molar ratio of the metal in the metal-containing compound according to formula (I) to the organic oxygen-containing titanium compound is between 0.01 and 0.5; and/or
• the molar ratio of the hydrocarbon moiety R in the metal-containing compound (I) to the titanium in the oxygen-containing titanium compound is between 0.10 and 0.60; and/or
• the molar ratio of the metal in the metal-containing compound having the formula (I) to the organic oxygen-containing titanium compound is lower than the molar ratio of the hydrocarbon moiety R in the metal-containing compound (I) to the titanium in the oxygen-containing titanium compound.

6. Process for production of a catalyst composition for polymerization of olefins according to any one of claims 1-5, **characterized in that** the process comprises combining:
a) a hydrocarbon solution comprising:
• a magnesium-containing compound selected from an organic oxygen-containing magnesium compound and a halogen-containing magnesium compound; and
• an organic oxygen-containing titanium compound;
b) a solution comprising a mixture of:
• a metal-containing compound having the formula (I):
MeRₙX₃₋ₙ (I)
in which X is a halogen, Me is a metal of group III of Mendelejev's Periodic Table of Elements, R is a hydrocarbon moiety comprising > 2 carbon atoms, and n is 1≤n<3, or a dimer of a compound of formula (I); and
• a silicon-containing compound of formula R'ₘSiCl₄₋ₘ in which 0≤m≤2 and R' is a hydrocarbon moiety comprising at least one carbon atom;
in which the combination of solutions a) and b) results in a suspension of solid particles.

7. Process according to claim 6 in which the magnesium-containing compound is selected from:
• organic oxygen-containing magnesium compounds such as alkoxides and alkyloxides which may be selected from magnesium methylate, magnesium ethylate, magnesium isopropylate, or magnesium ethylethylate;
• halogen-containing magnesium compounds such as magnesium dihalides.

8. Process according to any of the claims 6-7 in which
• R is a hydrocarbon moiety comprising ≥ 4 carbon atoms
• the metal Me is selected from aluminium, gallium or boron
• the halogen X is chlorine, bromine or iodine.

9. Process according to any of the claims 6-8 in which the metal-containing compound is selected from n-butyl aluminium dichloride, isobutyl aluminium dichloride, diisobutyl aluminium chloride, di-n-butyl aluminium chloride, sesquiisobutyl aluminium chloride, or mixtures thereof.

10. Polymerization process for production of a polyolefin material using a catalyst composition according to any of the claims 1-5 or using a catalyst composition obtained via the process according to any of the claim 6-9, in which the polyolefin material is selected ultra-high molecular weight polyethylene.

## Patentansprüche

1. Katalysatorzusammensetzung für die Polymerisation von Olefinen, **dadurch gekennzeichnet, dass**:
a) der Katalysator unter Verwendung einer metallhaltigen Verbindung der Formel (I):
MeRₙX₃₋ₙ (I),
worin X für ein Halogen steht, Me für ein Metall der Gruppe III von Mendelejews Periodensystem der Chemischen Elemente steht, R für einen Kohlenwasserstoffrest mit > 2 Kohlenstoffatomen steht und n für 1 ≤ n < 3 steht, oder eines Dimers einer Verbindung der Formel (I) hergestellt wird und
b) die mittlere Teilchengröße des Katalysators, wie sie durch D₅₀ (gemessen gemäß ISO 13320) reflektiert wird, zwischen 0,5 und 4,5 µm liegt;
wobei die Katalysatorzusammensetzung das durch Vereinigen von
a) einer Kohlenwasserstofflösung, umfassend:
• eine magnesiumhaltige Verbindung, die aus einer organischen sauerstoffhaltigen Magnesiumverbindung und einer halogenhaltigen Magnesiumverbindung ausgewählt ist; und
• eine organische sauerstoffhaltige Titanverbindung; und
b) einer Lösung, umfassend eine Mischung von:
• einer metallhaltigen Verbindung der Formel (I) :
MeRₙX₃₋ₙ (I),
worin X für ein Halogen steht, Me für ein Metall der Gruppe III von Mendelejews Periodensystem der Chemischen Elemente steht,
R für einen Kohlenwasserstoffrest mit > 2 Kohlenstoffatomen steht und n für 1 ≤ n < 3 steht, oder einem Dimer einer Verbindung der Formel (I) und
• einer siliciumhaltigen Verbindung der Formel R'ₘSiCl₄₋ₘ, worin 0 ≤ m ≤ 2 und R' für einen Kohlenwasserstoffrest mit mindestens einem Kohlenstoffatom steht;
erhaltene Produkt umfasst; wobei das Vereinigen der Lösungen a) und b) zu einer Suspension von festen Teilchen führt.

2. Katalysatorzusammensetzung nach Anspruch 1, wobei die metallhaltige Verbindung aus Diisobutylaluminiumchlorid, Di-n-butylaluminiumchlorid, Sesquiisobutylaluminiumchlorid oder Mischungen davon ausgewählt ist.

3. Katalysatorzusammensetzung nach einem der Ansprüche 1-2, wobei die magnesiumhaltige Verbindung aus
• organischen sauerstoffhaltigen Magnesiumverbindungen wie Alkoxiden und Alkyloxiden, die aus Magnesiummethylat, Magnesiumethylat, Magnesiumisopropylat und Magnesiumethylethylat ausgewählt sein können,
• halogenhaltigen Magnesiumverbindungen wie Magnesiumdihalogeniden
ausgewählt ist.

4. Katalysatorzusammensetzung nach einem der Ansprüche 1-3, wobei
• R für einen Kohlenwasserstoffrest mit ≥ 4 Kohlenstoffatomen steht,
• das Metall Me aus Aluminium, Gallium oder Bor ausgewählt ist,
• das Halogen X für Chlor, Brom oder Iod steht.

5. Katalysatorzusammensetzung nach einem der Ansprüche 1-4, wobei:
• das Molverhältnis des Metalls in der metallhaltigen Verbindung gemäß Formel (I) zu der organischen sauerstoffhaltigen Titanverbindung zwischen 0,01 und 0,5 liegt; und/oder
• das Molverhältnis des Kohlenwasserstoffrests R in der metallhaltigen Verbindung (I) zu dem Titan in der sauerstoffhaltigen Titanverbindung zwischen 0,10 und 0,60 liegt; und/oder
• das Molverhältnis des Metalls in der metallhaltigen Verbindung der Formel (I) zu der organischen sauerstoffhaltigen Titanverbindung kleiner ist als das Molverhältnis des Kohlenwasserstoffrests R in der metallhaltigen Verbindung (I) zu dem Titan in der sauerstoffhaltigen Titanverbindung.

6. Verfahren zur Herstellung einer Katalysatorzusammensetzung für die Polymerisation von Olefinen nach einem der Ansprüche 1-5, **dadurch gekennzeichnet, dass** das Verfahren das Vereinigen von
a) einer Kohlenwasserstofflösung, umfassend:
• eine magnesiumhaltige Verbindung, die aus einer organischen sauerstoffhaltigen Magnesiumverbindung und einer halogenhaltigen Magnesiumverbindung ausgewählt ist; und
• eine organische sauerstoffhaltige Titanverbindung; und
b) einer Lösung, umfassend eine Mischung von:
• einer metallhaltigen Verbindung der Formel (I) :
MeRₙX₃₋ₙ (I),
worin X für ein Halogen steht, Me für ein Metall der Gruppe III von Mendelejews Periodensystem der Chemischen Elemente steht,
R für einen Kohlenwasserstoffrest mit > 2 Kohlenstoffatomen steht und n für 1 ≤ n < 3 steht, oder einem Dimer einer Verbindung der Formel (I) und
• einer siliciumhaltigen Verbindung der Formel R'ₘSiCl₄₋ₘ, worin 0 ≤ m ≤ 2 und R' für einen Kohlenwasserstoffrest mit mindestens einem Kohlenstoffatom steht;
umfasst, wobei das Vereinigen der Lösungen a) und b) zu einer Suspension von festen Teilchen führt.

7. Verfahren nach Anspruch 6, bei dem die magnesiumhaltige Verbindung aus
• organischen sauerstoffhaltigen Magnesiumverbindungen wie Alkoxiden und Alkyloxiden, die aus Magnesiummethylat, Magnesiumethylat, Magnesiumisopropylat und Magnesiumethylethylat ausgewählt sein können,
• halogenhaltigen Magnesiumverbindungen wie Magnesiumdihalogeniden
ausgewählt wird.

8. Verfahren nach einem der Ansprüche 6-7, bei dem
• R für einen Kohlenwasserstoffrest mit ≥ 4 Kohlenstoffatomen steht,
• das Metall Me aus Aluminium, Gallium oder Bor ausgewählt ist,
• das Halogen X für Chlor, Brom oder Iod steht.

9. Verfahren nach einem der Ansprüche 6-8, bei dem die metallhaltige Verbindung aus n-Butylaluminiumchlorid, Isobutylaluminiumdichlorid, Diisobutylaluminiumchlorid, Di-n-butylaluminiumchlorid, Sesquiisobutylaluminiumchlorid oder Mischungen davon ausgewählt wird.

10. Polymerisationsverfahren zur Herstellung eines Polyolefinmaterials unter Verwendung einer Katalysatorzusammensetzung nach einem der Ansprüche 1-5 oder unter Verwendung einer durch das Verfahren nach einem der Ansprüche 6-9 erhaltenen Katalysatorzusammensetzung, wobei es sich bei dem Polyolefinmaterial um ultrahochmolekulares Polyethylen handelt.

## Revendications

1. Composition de catalyseur pour la polymérisation d'oléfines, **caractérisée en ce que** :
a) le catalyseur est produit à l'aide d'un composé contenant un métal possédant la formule (I) :
MeRₙX₃₋ₙ (I)
dans laquelle X représente un halogène, Me représente un métal du groupe III du tableau périodique des éléments de Mendeleïev, R représente un fragment hydrocarboné comprenant > 2 atomes de carbone et n est 1 ≤ n < 3, ou un dimère du composé de formule (I) ; et
b) la grosseur moyenne de particule du catalyseur comme le reflète le D₅₀ (mesuré selon la norme ISO 13320) se situe entre 0,5 et 4,5 µm ;
la composition de catalyseur comprenant le produit obtenu par la combinaison de :
a) une solution d'hydrocarbure comprenant :
• un composé contenant du magnésium choisi parmi un composé organique de magnésium contenant de l'oxygène et un composé de magnésium contenant un halogène ; et
• un composé organique de titane contenant de l'oxygène ; et
b) une solution comprenant un mélange de :
• un composé contenant un métal possédant la formule (I) :
MeRₙX₃₋ₙ (I)
dans laquelle X représente un halogène, Me représente un métal du groupe III du tableau périodique des éléments de Mendeleïev, R représente un fragment hydrocarboné comprenant > 2 atomes de carbone et n est 1 ≤ n < 3, ou un dimère du composé de formule (I) ; et
• un composé contenant du silicium de formule R'ₘSiCl₄₋ₘ dans lequel 0 ≤ m ≤ 2 et R' représente un fragment hydrocarboné comprenant au moins un atome de carbone ;
dans lequel la combinaison des solutions a) et b) conduit à une suspension de particules solides.

2. Composition de catalyseur selon la revendication 1, le composé contenant un métal étant choisi parmi le chlorure de diisobutylaluminium, le chlorure de di-n-butylaluminium, le chlorure de sesquiisobutylaluminium ou les mélanges correspondants.

3. Composition de catalyseur selon l'une quelconque des revendications 1-2 dans laquelle le composé contenant du magnésium est choisi parmi
• des composés organiques de magnésium contenant de l'oxygène tels que des alcoxydes et des alkyloxyles qui peuvent être choisis parmi le méthylate de magnésium, l'éthylate de magnésium, l'isopropylate de magnésium ou l'éthyléthylate de magnésium
• des composés de magnésium contenant un halogénure tels que des dihalogénures de magnésium.

4. Composition de catalyseur selon l'une quelconque des revendications 1-3 dans laquelle
• R représente un fragment hydrocarboné comprenant ≥ 4 atomes de carbone
• le métal Me est choisi parmi l'aluminium, le gallium ou le bore
• l'halogène X est le chlore, le brome ou l'iode.

5. Composition de catalyseur selon l'une quelconque des revendications 1-4 :
• le rapport molaire du métal dans le composé contenant un métal selon la formule (I) au composé organique de titane contenant de l'oxygène se situant entre 0,01 et 0,5 ; et/ou
• le rapport molaire du fragment hydrocarboné R dans le composé contenant un métal (I) au titane dans le composé de titane contenant de l'oxygène se situant entre 0,10 et 0,60 ; et/ou
• le rapport molaire du métal dans le composé contenant un métal possédant la formule (I) au composé organique de titane contenant de l'oxygène étant inférieur au rapport molaire du fragment hydrocarboné R dans le composé contenant un métal (I) au titane dans le composé de titane contenant de l'oxygène.

6. Procédé pour la production d'une composition de catalyseur pour la polymérisation d'oléfines selon l'une quelconque des revendications 1-5, **caractérisé en ce que** le procédé comprend la combinaison de :
a) une solution d'hydrocarbure comprenant :
• un composé contenant du magnésium choisi parmi un composé organique de magnésium contenant de l'oxygène et un composé de magnésium contenant un halogène ; et
• un composé organique de titane contenant de l'oxygène ;
b) une solution comprenant un mélange de :
• un composé contenant un métal possédant la formule (I) :
MeRₙX₃₋ₙ (I)
dans laquelle X représente un halogène, Me représente un métal du groupe III du tableau périodique des éléments de Mendeleïev, R représente un fragment hydrocarboné comprenant > 2 atomes de carbone et n est 1 ≤ n < 3, ou un dimère du composé de formule (I) ; et
• un composé contenant du silicium de formule R'ₘSiCl₄₋ₘ dans lequel 0 ≤ m ≤ 2 et R' représente un fragment hydrocarboné comprenant au moins un atome de carbone ;
dans lequel la combinaison des solutions a) et b) conduit à une suspension de particules solides.

7. Procédé selon la revendication 6 dans lequel le composé contenant du magnésium est choisi parmi
• des composés organiques de magnésium contenant de l'oxygène tels que des alcoxydes et des alkyloxyles qui peuvent être choisis parmi le méthylate de magnésium, l'éthylate de magnésium, l'isopropylate de magnésium ou l'éthyléthylate de magnésium ;
• des composés de magnésium contenant un halogénure tels que les dihalogénures de magnésium.

8. Procédé selon l'une quelconque des revendications 6-7 dans lequel
• R représente un fragment hydrocarboné comprenant ≥ 4 atomes de carbone
• le métal Me est choisi parmi l'aluminium, le gallium ou le bore
• l'halogène X est le chlore, le brome ou l'iode.

9. Procédé selon l'une quelconque des revendications 6-8 dans lequel le composé contenant un métal est choisi parmi le dichlorure de n-butylaluminium, le dichlorure d'isobutylaluminium, le chlorure de diisobutylaluminium, le chlorure de di-n-butylaluminium, le chlorure de sesquiisobutylaluminium ou les mélanges correspondants.

10. Procédé de polymérisation pour la production d'un matériau de polyoléfine à l'aide d'une composition de catalyseur selon l'une quelconque des revendications 1-5 ou à l'aide d'une composition de catalyseur obtenue via le procédé selon l'une quelconque des revendications 6-9, dans lequel le matériau de polyoléfine est un polyéthylène à ultra-haut poids moléculaire choisi.
